# EUROPÄISCHE PATENTSCHRIFT

(11) **EP 0 331 036 B1**
(45) Veröffentlichungstag und Bekanntmachung des Hinweises auf die Patenterteilung: **29.09.1993**
(21) Anmeldenummer: 89103268.2
(22) Anmeldetag: 24.02.1989
(51) Int. Cl.: B27G 19/04

(54) **Ringkreissäge mit Grundplatte**
Circular saw with an integral base plate
Scie circulaire avec plaque de base

(30) Priorität: 03.03.1988 DE 3806813
(43) Veröffentlichungstag der Anmeldung: 06.09.1989
(73) Patentinhaber: Karl M. Reich, Maschinenfabrik GmbH, 72607 Nürtingen (DE)
(72) Erfinder: Schulze, Werner, D-7443 Frickenhausen (DE); Kuhn, Reiner, D-7440 Nürtingen (DE); Raichle, Dieter, D-7440 Nürtingen-Reudern (DE)

(56) Entgegenhaltungen:
- EP-A- 0 340 467
- DE-A- 1 963 942
- DE-A- 2 655 787
- DE-A- 3 104 340
- DE-U- 8 803 627
- US-A- 1 806 528
- US-A- 1 811 577

## Beschreibung

Die Erfindung betrifft eine Ringkreissäge gemäß Oberbegriff von Anspruch 1.

Aus der DE-A-14 03 722 ist eine Ringkreissäge der eingangs genannten Art bekannt, bei der eine Pendelschutzhaube unterhalb der Grundplatte schwenkbar und senkrecht zum Sägering verschiebbar an dieser gelagert ist.

Dabei ist jedoch der Sägering nur nach einer Seite abgedeckt, so daß eine Berührung durch die Bedienungsperson und damit Verletzungen nicht ausgeschlossen sind. Beim Sägen muß dazuhin die Pendelschutzhaube nach oben verschwenkt werden, was einen erhöhten Kraftaufwand beim Vorschub bedingt.

Aus der US-A-18 06 528 ist eine Handkreissäge mit vollem Sägeblatt bekannt, bei der die Schutzhaube schwenkbar an der Grundplatte gelagert ist und das Sägeblatt in Ruhestellung von oben vollständig umfaßt. Sie weist damit ein großes Gewicht auf, was sich besonders bei großem Sägeblattdurchmesser nachteilig auf das Gewicht der gesamten Maschine auswirkt.

Diese Schutzhaube kann außerdem unabhängig von der Schwenkbewegung des Sägeblatts gegenüber diesem verschwenkt werden, sodaß das Sägeblatt freiliegt und den Bedienungsmann gefährdet.

Der Erfindung liegt daher die Aufgabe zugrunde, eine Ringkreissäge der eingangs genannten Art zu schaffen, bei der der Zahnkranz des Sägerings vollständig abgedeckt ist und die eine bequeme Handhabung ermöglicht.

Diese Aufgabe wird erfindungsgemäß durch die im kennzeichnenden Teil des Anspruchs 1 angegebenen Merkmale gelöst.

Bei der erfindungsgemäßen Ringkreissäge ist der Zahnkranz nach oben somit durch Antriebsgehäuse, Grundplatte und Abdeckelemente so abgedeckt, daß eine Berührung durch den Bedienungsmann ausgeschlossen ist.

Diese Abdeckelemente sind so ausgebildet, daß sie sich den verschiedenen Arbeitsstellungen des Sägerings anpassen und diesen sowohl bei der Tiefenverstellung als auch beim Kippen nach oben abdecken. Durch das in der Lagerkonsole verschieb- und feststellbar angeordnete Anschlagorgan läßt sich der Sägering bequem auf die gewünschte Schnittiefe einstellen.

Zu einer sicheren Führung zwischen Lagerkonsole und Antriebsgehäuse ist eine Führungsrinne vorgesehen, in die ein mit dem Antriebsgehäuse verbundenes Führungselement gleitet.

Im Anschlagorgan ist ferner ein Sensorelement vorgesehen, das mit einem im Antriebsgehäuse angeordneten Magnetschalter so zusammenwirkt, daß der Antriebsmotor erst nach Betätigung des Magnetschalters durch das Sensorelement einschaltbar ist. Dadurch ist gewährleistet, daß der Sägering in seiner Ruhestellung nicht in Bewegung gesetzt und in das Werkstück eingetaucht werden kann. Dies würde nämlich zu einer unzulässigen Überlastung der Lagerrollen für den Sägering führen.

Im folgenden ist ein Ausführungsbeispiel der Erfindung unter Bezugnahme auf die Zeichnungen näher beschrieben.

Es zeigen:
- Fig. 1: Ringkreissäge von der Seite
- Fig. 2: Schnitt nach Linie II-II in Fig. 1
- Fig. 3: Schnitt nach Linie III-III in Fig. 1
- Fig. 4: Zentrierorgan unten, Ansicht von innen
- Fig. 5: Schnitt nach Linie V-V in Fig. 4
- Fig. 6: Weitere Ausführungsform einer Ringkreissäge, von der Seite
- Fig. 7: Schnitt nach Linie VII-VII in Fig. 6

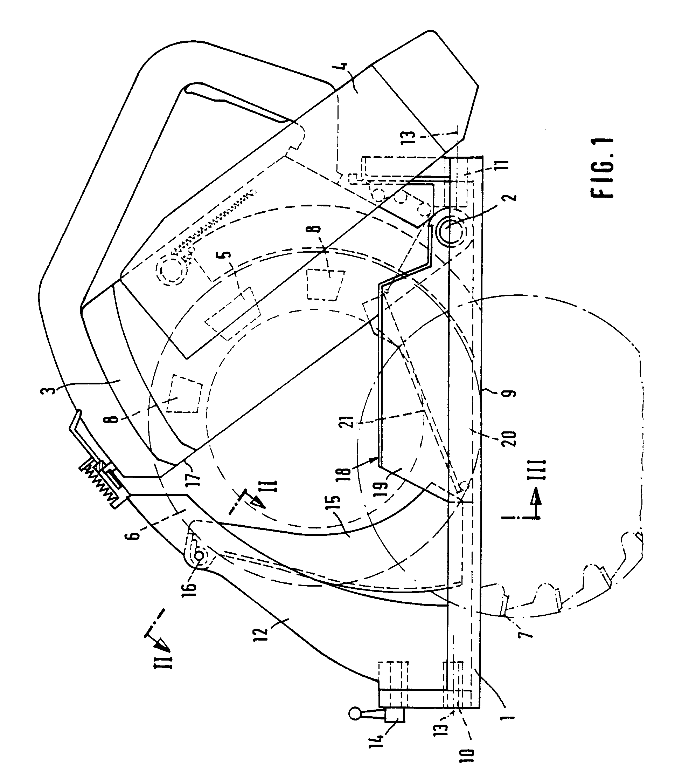

Wie Fig. 1 zeigt, ist an einer Grundplatte 1 über ein Schwenklager 2 ein Antriebsgehäuse 3 mit Elektromotor 4 schwenkbar gelagert.

Dieser Elektromotor 4 treibt über eine Antriebsrolle 5 einen Sägering 6 mit Zahnkranz 7, der durch zwei weitere Paare von Führungsrollen 8 am Antriebsgehäuse 3 gelagert ist. Fig. 1 zeigt den Sägering 6 gestrichelt in seiner Ruhestellung, bei der er sich vollständig über der Auflagefläche 9 der Grundplatte 1 befindet und strichpunktiert in der Stellung mit größter Schnittiefe.

Zum Schrägstellen des Sägerings 6 dienen Kipplager 10 und 11 am vorderen und hinteren Ende der Grundplatte 1.

Am Kipplager 10 ist eine Lagerkonsole 12 um die Kippachse 13 kippbar gelagert. Ein mit ihr verbundener Schraubbolzen 14 bewegt sich in einer kreisförmigen Nut von Lager 10, so daß sich die Lagerkonsole 12 in der gewünschten Kippstellung feststellen läßt.

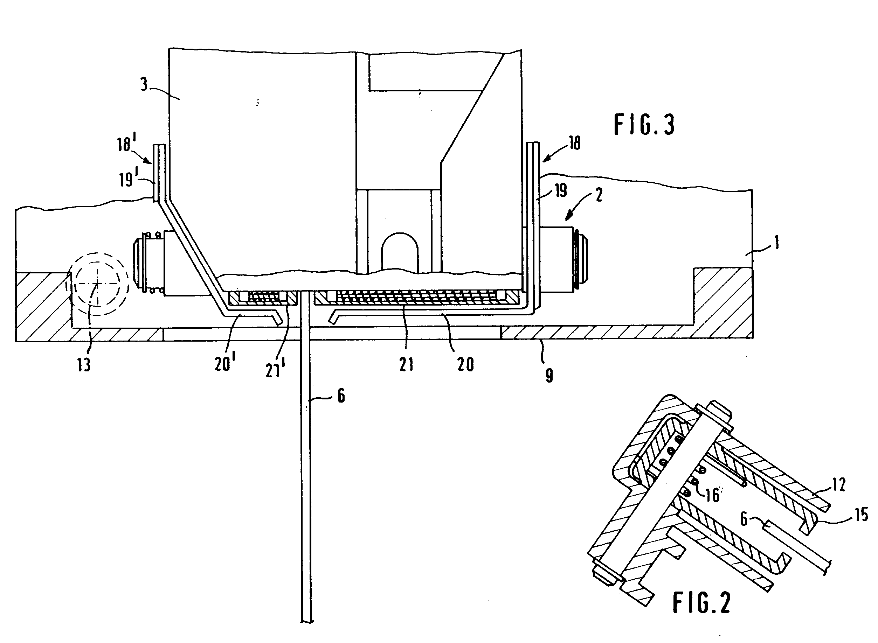

Die Lagerkonsole 12 weist einen im wesentlichen U-förmigen Querschnitt auf (Fig. 2), in ihrem oberen Bereich ist eine Pendelhaube 15 mit im wesentlichen U-förmigem Querschnitt schwenkbar gelagert. Sie wird durch eine Schenkelfeder 16 in Richtung Sägering 6 gedrückt und deckt diesen zusammen mit dem oberen U-förmigen Bereich der Lagerkonsole 12 nach vorne vollständig ab.

Am Antriebsgehäuse 3 ist eine Betätigungsfläche 17 vorgesehen, die bei der Tiefenverstellung des Sägerings so mit der Pendelhaube 15 zusammenwirkt, daß diese gegen Wirkung der Schenkelfeder 16 zwischen die Schenkel der Lagerkonsole 12 verschwenkt wird, so daß sie den Zahnkranz 7 nicht behindert.

Am Schwenklager 2 sind zu beiden Seiten von Sägering 6 Abdeckplatten 18, 18′ angeordnet (Fig. 3), deren senkrechte Schenkel 19, 19′ sich parallel zur Fläche des Sägerings 6 außerhalb des Antriebsgehäuses 3 und deren waagrechte Schenkel 20, 20′ bei senkrechter Stellung des Sägerings 6 parallel zur Auflagefläche 9 der Grundplatte 1 erstrecken. Diese Abdeckplatten 18, 18′ verhindern eine Berührung von Zahnkranz 7.

Zwischen den senkrechten Schenkeln 19, 19′ der Abdeckplatten 18, 18′ und dem Sägering 6 ist zu dessen beiden Seiten je eine Zwischenplatte 21, 21′ schwenkbar am Antriebsgehäuse 3 gelagert. Sie liegen mit ihrem freien Ende lose auf den waagrechten Schenkeln 20, 20′ der Abdeckplatten 18, 18′ auf und verhindern, daß der Zahnkranz 7 in jeder Stellung des Sägerings 6 von oben berührt werden kann.

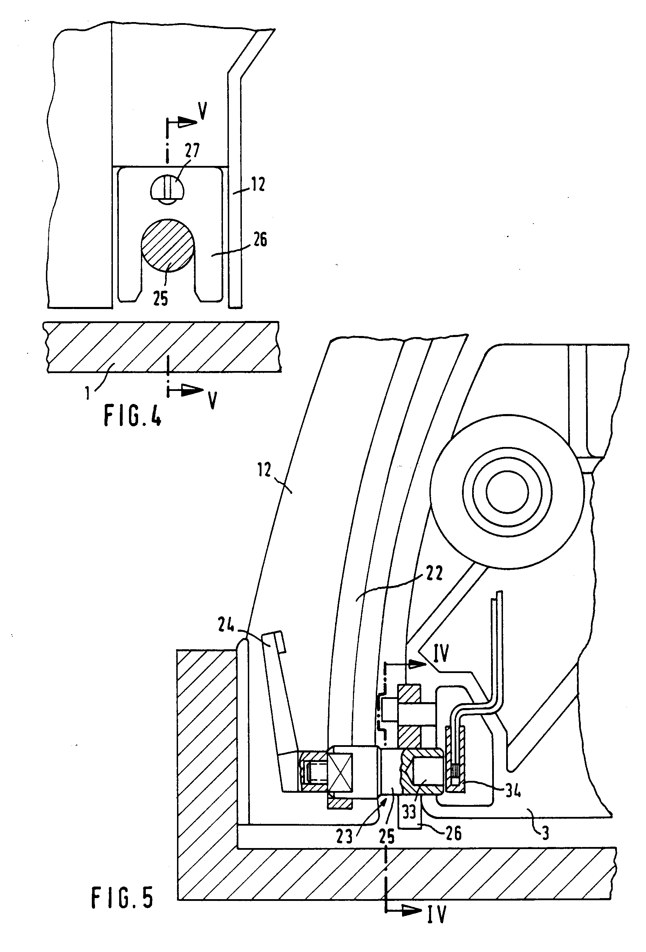

In einer bogenförmigen Nut 22 von Lagerkonsole 12 ist ein Anschlagorgan 23 verschiebbar gelagert (Fig. 4 und 5). Es läßt sich in einer beliebigen Stellung mittels einer Knebelschraube 24 an der Lagerkonsole 12 feststellen. In Richtung Sägering 6 ist das Anschlagorgan 23 mit einem Anschlagzapfen 25 versehen, mit dem eine Anschlaggabel 26 des Antriebsgehäuses 3 zusammenwirkt.

Im Anschlagzapfen 25 des Anschlagorgans 23 ist ein Sensorelement 27 in Form eines Dauermagneten angeordnet (Fig. 5), der mit einem Magnetschalter 28 im Antriebsgehäuse 3 zusammenwirkt. Damit ist gewährleistet, daß der Elektromotor 4 erst nach Betätigung des Magnetschalters 28 durch das Sensorelement 27 einschaltbar ist.

Das Schwenklager 2 und die Lagerkonsole 12 sind zur Schrägstellung von Sägering 6 um eine Kippachse 13 kippbar. Mit dem Schwenklager 2 werden somit auch die Abdeckplatten 18, 18′ um die Kippachse 13 verschwenkt (Fig. 1 und 3).

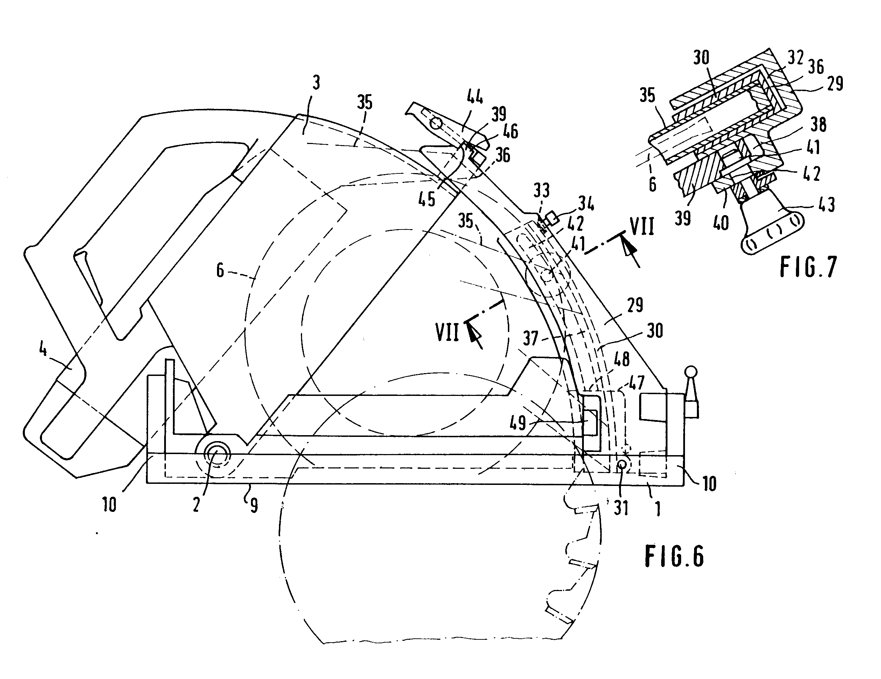

Die Fig. 6 und 7 zeigen eine weitere, bevorzugte Ausführungsform der Erfindung. Dabei ist wieder am Kipplager 10 eine Lagerkonsole 29 an der Grundplatte 1 kippbar gelagert.

Am unteren Ende der Lagerkonsole 29 ist eine Pendelhaube 30 um eine Achse 31 schwenkbar gelagert. Sie greift in eine U-förmige Rinne 32 von Lagerkonsole 29 ein und wird an ihrem oberen Ende durch eine Druckfeder 33 in Richtung Sägering 6 gedrückt. Die Druckfeder 33 stützt sich am inneren Rücken von Lagerkonsole 29 ab, ein mit der Pendelhaube 30 verbundener Anschlagbolzen 34 begrenzt die Schwenkbewegung der Pendelhaube 30.

In die Pendelhaube 30 mit im wesentlichen U-förmigem Querschnitt greift bei der Tiefenverstellung des Antriebsgehäuses 3 mit Sägering 6 ein mit dem Antriebsgehäuse 3 verbundener Abdeckstutzen 35 ein, der in Fig. 6 gestrichelt in seiner ausgefahrenen Stellung und strichpunktiert in einer mittleren Stellung dargestellt ist, wobei eine scharfe Anlagenkante 36 dichtend am inneren Rücken 37 der Pendelhaube 30 entlang gleitet und diese gegen Wirkung der Druckfeder 33 leicht nach außen verschwenkt.

Damit werden die beim Sägen vom Sägering 6 nach oben geschleuderten Späne über die Pendelhaube 30 und dem Abdeckstutzen 35 im Innern der Ringkreissäge geführt und durch eine nicht dargestellte Austrittsöffnung entweder ins Freie befördert oder von einem nicht dargestellten Absauggebläse angesaugt.

Wie insbesondere Fig. 7 zeigt, weist die Lagerkonsole 29 eine kreisbogenförmige Führungsrinne 38 auf, in die ein mit dem Antriebsgehäuse 3 verbundenes Führungselement 39 eingreift. Damit wird das Antriebsgehäuse und damit der Sägering 6 bei der Tiefenverstellung über den gesamten Schwenkbereich sicher geführt.

In einer Seitenwand 40 von Lagerkonsole 29 ist ein Anschlagbolzen 41 in einer kreisbogenförmigen Nut 42 verschiebbar gelagert, er läßt sich durch eine Spannmutter 43 in der gewünschten Lage an der Lagerkonsole 29 feststellen.

Bei der Tiefenverstellung von Antriebsgehäuse 3 schlägt Führungselement 39 am Anschlagbolzen 41 an und bewirkt so die Festlegung der gewünschten Schnittiefe.

Am Führungselement 39 ist ein Rasthebel 44 schwenkbar gelagert, dessen Rastkante 45 in der obersten Stellung von Antriebsgehäuse 3 mit einem Rastnocken 46 von Lagerkonsole 29 zusammenwirkt. Damit wird das Antriebsgehäuse in seiner obersten Stellung an einer Schwenkbewegung gehindert, diese ist erst nach Anheben von Rasthebel 44 möglich.

Wie bereits beim vorhergehenden Ausführungsbeispiel beschrieben, ist mit dem Anschlagbolzen 41 ein Sensorelement verbunden, das mit einem Magnetschalter im Antriebsgehäuse 3 zusammenwirkt.

Im unteren Bereich weist sowohl die Lagerkonsole 29 als auch die Pendelhaube 30 einen seitlichen Durchbruch 47 bzw. 48 auf, sodaß eine ungehinderte Sicht auf den Sägeschnitt möglich ist. Der Durchbruch 48 in der Pendelhaube 30 ist durch ein durchsichtiges Sichtfenster 49 aus Kunststoff abgedeckt.

## Patentansprüche

1. Ringkreissäge mit Grundplatte (1), an der ein Antriebsgehäuse (3) mit Elektromotor (4) und ein von diesem antreibbaren Sägering (6) schwenkbar gelagert ist und mit an der Grundplatte angeordneten Abdeckelementen für den Sägering (6), **dadurch gekennzeichnet,** daß die Grundplatte (1) gegenüber dem Schwenklager (2) eine Lagerkonsole (12, 29) aufweist, an der eine Pendelhaube (15, 30) mit U-förmigem Querschnitt schwenkbar gelagert ist, daß das Antriebsgehäuse (3) eine mit der Pendelhaube (15, 30) zusammenwirkende Betätigungsfläche (17, 36) aufweist, die bei der Tiefenverstellung des Sägerings (6) die Pendelhaube (15, 30) gegen Wirkung einer Feder (16, 33) nach außen verschwenkt und daß alle den Zahnkranz (7) des Sägerings (6) abdeckenden Abdeckelemente (12, 15, 18, 29, 30) an der Oberseite der Grundplatte (1) angeordnet sind.

2. Ringkreissäge nach Anspruch 1, **dadurch gekennzeichnet,** daß die Lagerkonsole (12, 29) einen U-förmigen Querschnitt aufweist, der den Zahnkranz (7) des Sägerings (6) beidseitig über einen Teil seines Umfangs abdeckt.

3. Ringkreissäge nach Anspruch 1 oder 2, **dadurch gekennzeichnet,** daß die Lagerkonsole (29) eine kreisbogenförmige Führungsrinne (38) aufweist, in der ein mit dem Antriebsgehäuse (3) verbundenes Fühkungselement (39) beweg- und feststellbar gelagert ist.

4. Ringkreissäge nach Anspruch 3, **dadurch gekennzeichnet,** daß mit dem Antriebsgehäuse (3) ein Abdeckstutzen (35) mit im wesentlichen U-förmigem Querschnitt verbunden ist, der bei der Tiefenverstellung des Sägerings (6) in die Pendelhaube (30) eingreift und der eine scharfe Anlagekante (36) aufweist, die am Rücken (37) der Pendelhaube (30) gleitend anliegt.

5. Ringkreissäge nach einem der Ansprüche 1 bis 4, **dadurch gekennzeichnet,** daß an der Lagerkonsole (12, 29) ein in Höhenrichtung verschieb- und feststellbares Anschlagorgan (23, 41) vorgesehen ist, mit dem ein Anschlagelement (26, 39) des Antriebsgehäuses (3) zur Tiefeneinstellung des Sägering (6) zusammenwirkt.

6. Ringkreissäge nach einem der Ansprüche 1 bis 5, **dadurch gekennzeichnet,** daß am Antriebsgehäuse (3) ein schwenkbarer Rasthebel (44) angeordnet ist, der das Antriebsgehäuse (3) in Ruhestellung mit der Lagerkonsole (29) verriegelt.

7. Ringkreissäge nach Anspruch 5 oder 6, **dadurch gekennzeichnet,** daß das Anschlagorgan (23, 41) mit einem Sensorelement (33) versehen ist, das mit einem im Antriebsgehäuse (3) angeordneten Schalter (34) so zusammenwirkt, daß der Elektromotor (4) erst nach Betätigung des Schalters (34) durch das Sensorelement (33) einschaltbar ist.

8. Ringkreissäge nach Anspruch 7, **dadurch gekennzeichnet,** daß das Sensorelement (33)als Dauermagnet und der Schalter (34) als Magnetschalter ausgebildet ist.

9. Ringkreissäge nach einem der Ansprüche 1 bis 8, **dadurch gekennzeichnet,** daß zu beiden Seiten des Sägerings (6) schwenkbare Abdeckplatten (18, 18') angeordnet sind.

10. Ringkreissäge nach einem der Ansprüche 1 bis 9, **dadurch gekennzeichnet,** daß die Grundplatte (1) mit einem zum Schwenklager (2) senkrechten Kipplager (13) versehen ist, in dem das Antriebsgehäuse (3) mit Sägering (6) zusammen mit der Lagerkonsole (12, 29) und den Abdeckplatten (18, 18') kippbar gelagert ist.

11. Ringkreissäge nach einem der Ansprüche 1 bis 10, **dadurch gekennzeichnet,** daß die Pendelhaube (30) in der Nähe der Grundplatte (1) ein Sichtfenster (49) aufweist, das die Sicht auf den Sägeschnitt ermöglicht.

## Claims

1. A ring circular saw having a sole plate (1) on which a drive casing (3) with electric motor (4) and a sawing ring (6) drivable by said motor are pivotably mounted and having covering elements for said sawing ring (6) disposed on said sole plate, **wherein** said sole plate (1) has opposite the pivot bearing (2) a bearing support (12, 29) on which a safety guard (15, 30) with U-shaped cross-section is pivotably mounted, wherein said drive casing (3) has an actuating surface (17, 36) interacting with said safety guard (15, 30) and pivoting said safety guard (15, 30) outwards against the force of a spring (16, 33) during depth adjustment of said sawing ring (6), and wherein all covering elements (12, 15, 18, 29, 30) covering the gear rim (7) of said sawing ring (6) are disposed on the upper side of said sole plate (1).

2. A ring circular saw according to Claim 1, **wherein** said bearing support (12, 29) has a U-shaped cross-section that covers said gear rim (7) of said sawing ring (6) on both sides over a part of its circumference.

3. A ring circular saw according to Claim 1 or 2, **wherein** said bearing support (12, 29) has an arc-shaped guide channel (38) in which a guide element (39) connected to said drive casing (3) is movably and lockably mounted.

4. A ring circular saw according to Claim 3, **wherein** a cover connection (35) with substantially U-shaped cross-section is connected to said drive casing (3), said support engaging in said safety guard (30) during depth adjustment of said sawing ring (6) and having a sharp contact edge (36) in sliding contact with the back surface (37) of said safety guard (30).

5. A ring circular saw according to one of Claims 1 to 4, **wherein** a stop element (23, 41) movable and lockable in the height direction is provided on said bearing support (12, 29) and interacts with a stop element (26, 39) of said drive casing (3) for depth adjustment of said sawing ring (6).

6. A ring circular saw according to one of Claims 1 to 5, **wherein** a pivotable engaging lever (44) is disposed on said drive casing (3) and locks said drive casing (3) with said bearing support (29) in the rest position.

7. A ring circular saw according to Claim 5 or 6, **wherein** said stop element (23, 41) is provided with a sensor element (33) that interacts with a switch (34) disposed inside said drive casing (3) such that said electric motor (4) cannot be switched on until said switch (34) has been actuated by said sensor element (33).

8. A ring circular saw according to Claim 7, **wherein** said sensor element (33) is designed as a permanent magnet and said switch (34) as a solenoid switch.

9. A ring circular saw according to one of Claims 1 to 8, **wherein** pivotable covering plates (18, 18') are disposed on both sides of said sawing ring (6).

10. A ring circular saw according to one of Claims 1 to 9, **wherein** said sole plate (1) is provided with a tilting bearing (13) vertical to said pivot bearing (2) and in which said drive casing (3) with said sawing ring (6) is tiltably mounted together with said bearing support (12, 29) and said covering plates (18, 18').

11. A ring circular saw according to one of Claims 1 to 10, **wherein** said safety guard (30) has a vision panel (49) near to the sole plate (1) and providing a view of the sawing action.

## Revendications

1. Scie circulaire annulaire avec plaque d'assise (1) sur laquelle est monté, tout en pouvant pivoter, un carter d'entraînement (3) avec moteur électrique (4) et un anneau de scie (6) entraîné par celui-ci et avec des éléments de recouvrement disposés sur la plaque d'assise et destinés à l'anneau de scie (6),
**caractérisée en ce** que la plaque d'assise (1) présente une console d'appui (12, 29) en face du palier pivotant (2), console sur laquelle est monté, tout en pouvant pivoter, un capot oscillant (15, 30) à section en U, en ce que le carter d'entraînement (3) présente une surface d'actionnement (17, 36) agissant avec le capot oscillant (15, 30), surface qui lors du réglage en profondeur de l'anneau de scie (6) fait pivoter le capot oscillant (15, 30) vers l'extérieur en sens inverse de la force oppositionnelle d'un ressort (16, 33) et an ce que tous les éléments (12, 15, 18, 29, 30) recouvrant la couronne dentée (7) de l'anneau de scie (6) sont disposés sur la face supérieure de la plaque d'assise (1).

2. Scie circulaire annulaire suivant la revendication n^{o} 1, **caractérisée en ce** que la console d'appui (12, 29) présente une section en U qui recouvre la couronne dentée (7) de l'anneau de scie (6), de part et d'autre, sur une partie de sa périphérie.

3. Scie circulaire annulaire suivant la revendication n^{o} 1 ou 2, **caractérisée en ce** que la console d'appui (29) présente une goulotte de guidage en forme d'arc de cercle (38) dans laquelle est monté, tout en pouvant être déplacé et bloqué, un élément de guidage (39) relié au carter d'entraînement (3).

4. Soie circulaire annulaire suivant la revendication n^{o} 3, **caractérisée en ce** qu'une tubulure de recouvrement (35), à section essentiellement en U, est reliée au carter d'entraînement (3), tubulure qui, lors du réglage en profondeur de l'anneau de scie (6), s'engage dans le capot oscillant (30) et qui présente un bord d'appui effilé (36) qui vient prendre appui, tout en pouvant glisser, sur le dos (37) du capot oscillant (30).

5. Scie circulaire annulaire suivant l'une des revendications n^{o} 1 à 4, **caractérisée en ce** qu'un organe d'arrêt (23, 41) déplaçable et blocable dans le sons de la hauteur est prévu sur la console d'appui (12, 29), organe avec lequel un élément d'arrêt (26, 39) du carter d'entraînement (3) est en interaction pour la réglage en profondeur de l'anneau de scie (6).

6. Scie circulaire annulaire suivant l'une des revendications n^{o} 1 à 5, **caractérisée en ce** qu'un levier à acrans pivotant (44) est disposé sur le carter d'entraînement (3), levier qui, en position de repos, verrouille le carter d'entraînement (3) avec la console d'appui (29).

7. Scie circulaire annulaire suivant l'une des revendications n^{o} 5 ou 6, **caractérisée en ce** que l'organe d'arrêt (23, 41) est doté d'un élément capteur (33) qui agit avec un commutateur (34) disposé dans le carter d'entraînement (3) de telle manière que le moteur électrique (4) ne peut être mis en marche qu'après l'enclenchement du commutateur (34) par l'élément capteur (33).

8. Scie circulaire annulaire suivant la revendication n^{o} 7, **caractérisée en ce** que l'élément capteur (33) est conçu sous forme d'aimant permanent et le commutateur (34) sous forme de commutateur magnétique.

9. Scie circulaire annulaire suivant l'une des revendications n^{o} 1 à 8, **caractérisée en ce** que des plaques de recouvrement (18, 18') pivotantes sont disposées de part et d'autre de l'anneau de scie (6).

10. Scie circulaire annulaire suivant l'une des revendications n^{o} 1 à 9, **caractérisée en ce** que la plaque d'assise (1) est dotée d'un palier basculant (13) perpendiculaire au palier pivotant (2), palier basculant dans lequel est logé, tout en pouvant basculer, le carter d'entraînement (3) avec l'anneau de scie (6), conjointement avec la console d'appui (12, 29) et les plaques de recouvrement (18, 18').

11. Scie circulaire annulaire suivant l'une des revendications n^{o} 1 à 10, **caractérisée en ce** que le capot oscillant (30) présente, à proximité de la plaque d'assise (1), un hublot(49) permettant d'avoir une vue sur la coupe.
